# EUROPEAN PATENT APPLICATION

(11) **EP 4 708 793 A1**
(43) Date of publication of application: **11.03.2026**
(21) Application number: 25199675.7
(22) Date of filing: 02.09.2025
(51) Int. Cl.: H04L 27/26, H04W 56/00

(54) **WIRELESS STATION AND METHOD OF OPERATION OF A WIRELESS STATION IN A FIXED WIRELESS ACCESS NETWORK**

(30) Priority: 04.09.2024 GB 202412989
(71) Applicant: Cambium Networks Ltd, Ashburton, Devon TQ13 7UP (GB)
(72) Inventor: STRONG, Peter, Ashburton, TQ13 7UP (GB); JAMIN, Antony, Ashburton, TQ13 7UP (GB)
(74) Representative: EIP

(57) **Abstract**

A wireless station is operated in a fixed wireless access network, the wireless station comprising a receiver circuit (23) configured to receive messages each having a synchronisation preamble part and a payload data part. A first message (11) is received having at least the synchronisation preamble part (9). A plurality of further messages (13) is received, each further message having been transmitted without the synchronisation preamble part, by generating the synchronisation preamble part (17) based on the received synchronisation preamble part (9) of the first message and providing the receiver circuit (23) with the generated synchronisation preamble part.

## Description

### Technical Field

The present invention relates generally to a wireless station and a method of operation of a wireless station in a fixed wireless access network, the wireless station comprising a receiver circuit configured to receive messages each having a synchronisation preamble part and a payload data part, the wireless station being configured to generate the synchronisation preamble part and to provide the receiver circuit with the generated synchronisation preamble part, and more specifically, but not exclusively, to a method of operation of a wireless station and a wireless station configured to use message formats according to an IEEE 802.11 Wi-Fi standard.

### Background

A fixed wireless access network may comprise a number of wireless stations, including an access point and subscriber modules. The access point is typically mounted on an antenna tower, in communication with a number of wireless clients, which may be referred to as subscriber modules, at fixed locations within an area of coverage of the access point, typically mounted on buildings or rooftops. Typically, propagation distances between the access point and the subscriber modules may cover a range from tens of metres to several kilometres or more. A fixed wireless access system may operate according to a pre-determined time division duplex schedule, which may provide efficient operation in which the known propagation times may be accommodated by appropriately adjusting transmission times so that messages arrive within the pre-determined time windows. It would be convenient to operate the fixed wireless network using message formats according to existing wireless network standards, for example Wi-Fi standards, so that commercially available integrated circuits can be used to implement wireless transceivers in the system. However, existing Wi-Fi standards typically provide for relatively inefficient data transmission for longer range links, in part due to overheads in the message format. It would be beneficial to be able to use integrated circuits configured to operate according to a Wi-Fi standard in a fixed wireless access network in a more efficient manner.

### Summary

In accordance with a first aspect of the present invention, there is provided a method of operation of a wireless station in a fixed wireless access network, the wireless station comprising a receiver circuit configured to receive messages each having a synchronisation preamble part and a payload data part, the method comprising: receiving a first message having at least the synchronisation preamble part; and receiving a plurality of further messages, each further message having been transmitted without the synchronisation preamble part, by generating the synchronisation preamble part based on the received synchronisation preamble part of the first message and providing the receiver circuit with the generated synchronisation preamble part.

Generating the synchronisation preamble part and providing it to the receiver circuit allows more spectrally efficient transmission of payload data in the fixed wireless access network, because the further messages may be transmitted without the synchronisation preamble part. In the fixed wireless access network, the relative positions of the wireless stations are not expected to change, and the signal propagation times are expected to be constant between the first message and the further messages. According to this disclosure, the received preamble synchronization preamble part of the first message can be used to establish synchronisation time for the further messages, because this is not expected to change between messages. The specified preamble synchronisation parts may be generated locally on the basis of synchronisation timing established by the first message. The locally generated synchronisation preamble parts may then be provided to the receiver circuit, which requires the preamble parts for each message. By transmitting the further messages without the synchronisation preamble parts, it is possible to send more payload data in a given time period.

In an example, the method comprises providing the receiver circuit with the generated synchronisation preamble part as a signal modulated onto a carrier frequency. In an example, the carrier frequency is the carrier frequency of the first message and in another example the carrier frequency is an Intermediate Frequency.

Providing the receiver circuit with the generated synchronisation preamble part as a signal modulated onto a carrier frequency allows an existing Wi-Fi integrated circuit to be used to provide the receiver circuit, which is configured to receive a signal modulated onto the carrier frequency, at either the radio frequency (RF) of the signal received from an antenna or at an intermediate frequency (IF), if an IF input is available on the integrated circuit.

In an example, the method comprises providing the receiver circuit with the generated synchronisation preamble part at baseband. If the receiver circuit has an input at baseband, typically for a zero intermediate frequency digital signal having Inphase and Quadrature components, this provides an efficient way of providing the synchronisation preamble part, avoiding an up conversion stage.

In an example, the receiver circuit is configured to receive messages conforming to an IEEE 802.11 Wi-Fi standard. This allows commercially available integrated circuits to be used to provide at least the receiver circuit, providing a cost-effective implementation. The receiver circuit may be at least part of an Application Specific Integrated Circuit.

In an example the wireless station is a subscriber module in the fixed wireless access network and in another example the wireless station is an access point in the fixed wireless access network.

In accordance with a second aspect of the invention, there is provided a wireless station configured for operation in a fixed wireless access network, the wireless station comprising a receiver circuit configured to receive messages each having a synchronisation preamble part and a payload data part, the wireless station being configured to: receive a first message having at least the synchronisation preamble part; and receive a plurality of further messages, each further message having been transmitted without the synchronisation preamble part, by generating the synchronisation preamble part based on the received synchronisation preamble part of the first message and providing the receiver circuit with the generated synchronisation preamble part.

In an example, the wireless station comprises a preamble generation circuit configured to generate the synchronisation preamble part as a signal modulated onto a carrier frequency.

In an example, the receiver circuit is at least part of an Application Specific Integrated Circuit and the preamble generation circuit is outside the Application Specific Integrated Circuit.

In an example, the receiver circuit is configured to receive messages conforming to an IEEE 802.11 Wi-Fi standard.

In an example, the wireless station is a subscriber module in the fixed wireless access network and in another example, the wireless station is an access point in the fixed wireless access network.

In accordance with a third aspect of the invention there is provided a wireless station configured for operation in a fixed wireless access network, the wireless station comprising a transmitter circuit configured to transmit messages each having a synchronisation preamble part and a payload data part, the wireless station being configured to: transmit a first message having at least the synchronisation preamble part; and transmit a plurality of further messages without the synchronisation preamble part, by generating the synchronisation preamble part and inhibiting transmission of the synchronisation preamble part.

In an example, the wireless station comprises a switch, the wireless station being configured to generate the plurality of further messages having the payload data part and the synchronisation preamble part and to use the switch to allow transmission of the payload data part and to inhibit transmission of the synchronisation preamble part. In an example, the switch is configured to switch a signal modulated onto a carrier frequency and in another example, the switch is configured to swich a signal at baseband.

Further features and advantages of the invention will be apparent from the following description of exemplary embodiments of the invention, which are given by way of example only.

### Brief Description of the Drawings

Figure 1 is a schematic diagram illustrating timing and propagation of messages in an embodiment of the invention;
Figure 2 is a block diagram of a wireless station in an embodiment of the invention showing a switch to select between an antenna and a preamble generator to provide an input to a receiver circuit.
Figure 3 is a block diagram of a wireless station in an embodiment of the invention showing a switch to select two transmitter circuits to provide an input to an antenna;
Figure 4 is a block diagram illustrating a preamble generator and a receiver circuit in an embodiment of the invention; and
Figure 5 is a flow diagram according to an embodiment of the invention.

### Detailed Description

By way of example, embodiments of the invention will now be described in the context of a fixed wireless access network configured to operate using WI-FI message protocols according to IEEE 802.11ax and IEEE 802.11be standards, however it will be appreciated that embodiments of the invention are not limited to these specific standards and may apply to systems operating according to other signal formats or standards, or according to proprietary designs.

A fixed wireless access network may provide a number of subscribers with data access, for example Internet access, within a wide geographical area. The wireless network comprises a number of wireless stations, which include access points and subscriber modules. One or more access points are provided, typically sited on antenna towers, arranged to transmit and receive radio frequency signals to a number of subscriber modules, which may be referred to as wireless outstations, wireless clients, or stations (STA). The subscriber modules, or at least the antennas for the subscriber modules, are typically mounted in fixed positions on buildings, and typically employ high gain antennas aligned with the access point to give reduced signal loss. The path to the access point may be line of sight or non-line of sight, and the path length may be within a wide range of values, from 10s of metres or less to several kilometres or more, giving a wide range of round trip propagation times.

It is convenient to use existing message formats for the fixed wireless access system, since this allows use of commercially available chipsets that the provide a high degree of integration and provide for an economical implementation. For example, Wi-Fi message formats according to IEEE 802.11ax and IEEE 802.11be standards may be used, which may operate in 2.4, 5 and 6 GHz Wi-Fi bands.

However, the Wi-Fi standards are intended for use in systems in which wireless station can move in relation to one another between messages, and in which messages are not transmitted in a pre-defined time division duplex schedule. As a result, each message is specified to be transmitted with a synchronisation preamble, which allows the receiver circuit to synchronise timing with the received message, to allow the message to be demodulated and decoded. However, it has been found, according to this disclosure, that in a fixed wireless access system, in which wireless stations are not expected to move between messages and which is operated according to a pre-determined time division duplex schedule, the synchronisation timing that has been determined for one message can be used for subsequent messages. Accordingly, it is not necessary to transmit a synchronisation preamble for every message in a fixed wireless access system. However, integrated circuits that are intended for use in transceivers in Wi-Fi systems are typically designed to expect messages to be transmitted and received according to Wi-Fi standards, in which each message has a synchronisation preamble. Accordingly, it would be conventional to transmit synchronisation a preamble for each message if a Wi-Fi signal format is used in a fixed wireless access network, so that standard Wi-Fi integrated circuits can be used. As a result, fixed wireless access systems using standard Wi-Fi chips or chipsets may not operate to transmit payload data with a high efficiency due to the overhead of the preambles in the signal format.

According to this disclosure, it has been found that a synchronisation preamble may be generated locally at a subscriber module and provided to the receiver circuit of the subscriber module without the synchronisation preamble being transmitted over the air from the access point. This allows more payload data to be transmitted in a given time period, using the time periods that would conventionally be used to transmit synchronisation preambles.

The received synchronization preamble part of a first message can be used to establish synchronisation time for further messages, because the timing of received messages is not expected to change between messages. The first message is transmitted with a synchronisation preamble, to establish initial timing. This may be on initial set up of the link to the wireless station, and/or may be for periodic re-synchronisation. The preamble synchronisation parts for further messages may be generated locally on the basis of synchronisation timing established by the first message. The locally generated synchronisation preamble parts may then be provided to the receiver circuit, which may require the preamble parts for each message. In an example, the locally generated synchronisation preamble is generated at the receiving wireless station according to a wireless communication standard which the receiver circuit is designed to receive.

In the fixed wireless access network, the relative positions of the wireless stations are not expected to change, and the signal propagation times are expected to be constant between the first message and the further messages. According to this disclosure, the received preamble synchronization preamble part of the first message can be used to establish synchronisation time for the further messages, because this is not expected to change between messages.

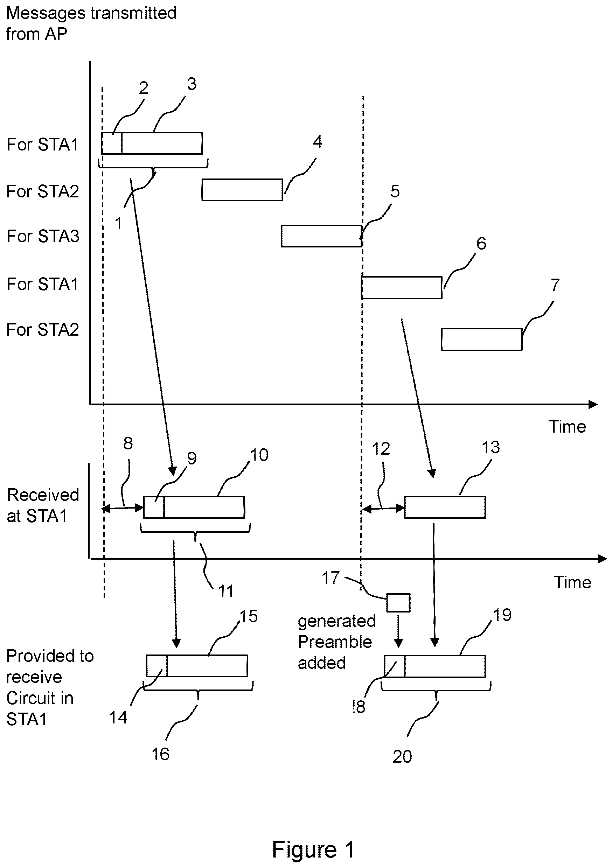

Figure 1 is a schematic diagram illustrating timing and propagation of messages according to this disclosure. Figure 1 illustrates the downlink portion of a Time Division Multiple Access (TDMA) and Time Division Duplex (TDD) schedule, showing the timing of access point transmission messages to three subscriber modules STA1, STA2 and STA3 and the timings of messages as received from the access point at STA1, as an example. A first message 1 is transmitted to subscriber module STA1. This first message 1 is transmitted with a synchronisation preamble as specified according to, in this example, a Wi-Fi standard. It can be seen that the first message has a synchronisation preamble part 2 and a data payload part 3. After a propagation delay 8, due to the over-the-air transit time between the access point and the subscriber module STA1, the received first message 11 is received at the antenna of STA1, comprising the received synchronisation preamble 9 and the received data payload 10. The received first message is provided to the receiver circuit in STA1, via a radio frequency connection such as a path through a radio frequency switch, as provided first message 16, again comprising the synchronisation preamble part 14 and the data payload part 15. The first message is demodulated and decoded as appropriate to the modulation format, using synchronisation timing derived from the synchronisation preamble.

As shown in Figure 1, messages 4, 5 and 7 are sent from the access point to other subscriber modules STA2, STA3. As shown, a time division multiple access (TDMA) multiplexing scheme is shown, in which a message is sent to each subscriber module in a respective timeslot for the subscriber module. However, other multiple access schemes may be used. For example, each of the messages shown 1, 4, 5, 6, 7 may be a Multi-User Multiple Input Multiple Output (MU-MIMO) transmission in which data is sent to several subscriber modules in a MU-MIMO group at the same time, using mutually orthogonal spatial beams. MU-MIMO transmissions may be time multiplexed to different MU-MIMO groups, so that each message 1, 4, 5, 6, 7 shown in Figure 1 would be to the users of a specific MU-MIMO group. A MU-MIMO group is a group of subscriber modules to which it is possible to send mutually orthogonal beams, that is to say to send a beam to one subscriber module and a null to each other member of the MU-MIMO group.

As shown in Figure 1, a further message 6 is transmitted to STA1, after the first message 1, from the access point. This message is transmitted without a synchronisation preamble, and specifically without the synchronisation preamble transmitted as part of the first message. The further message, comprising payload data only and not comprising a synchronisation preamble, is received at the antenna of STA1 as message 13 after propagation delay 12, which is expected to be the same a propagation delay 8 for the first message which is transmitted through the same over-the-air path. At STA1, a generated preamble 17 is added at the beginning of the received further message so that a message 20, comprising the generated preamble 18 and the received payload portion 19, is provided to the receive circuit in STA1, in this example at the radio frequency of the received further message 13. In an alternative approach, the generated preamble and the received payload portion are provided to the receiver at baseband or at an intermediate frequency. In the case of MU-MIMO transmission, the message 20 is received at several subscriber modules in the MU-MIMO group, and a generated preamble is added at each subscriber module of the MU-MIMO-group.

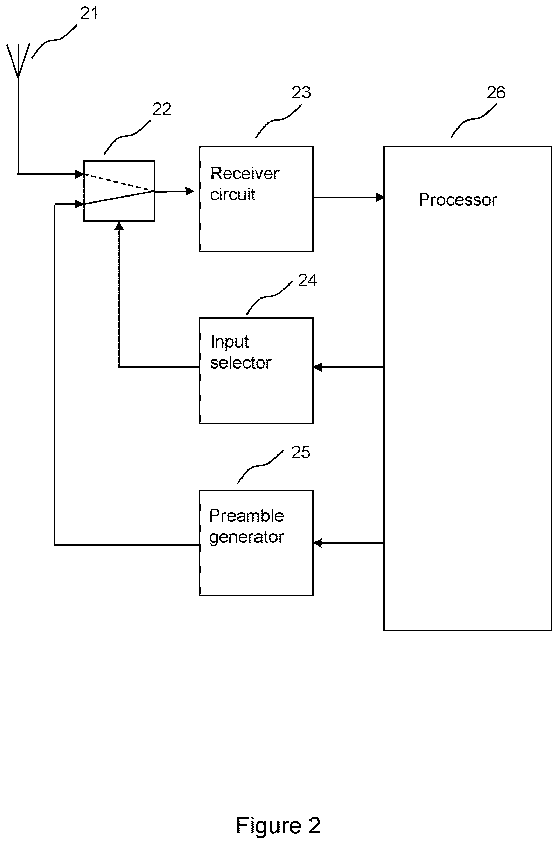

Figure 2 is a block diagram of parts of a wireless station according to this disclosure. Signals are received from the access point, typically at the Wi-Fi transmission frequencies of nominally 2.4 GHz, 5 GHz and/or 6 GHz at antenna 21. In a fixed wireless access system, the antenna is typically a directional antenna aligned with the access point to provide improved signal gain and to reject interference arriving from other directions. In the example illustrated, there is a separate receive antenna 21 and transmit antenna, but in other examples a single antenna may be used for transmit and receive, and a transmit/receive switch may be used to connect the antenna to the receiver circuit 23 or a transmitter circuit as appropriate. As shown, a processor functional block 26, which may comprise one or more processors, is connected to a receiver circuit 23, an input selector 24, and a preamble generator 25. A radio frequency switch 22 is used in this example to select between the antenna 21 and the preamble generator 25 to provide the input to the receiver circuit 23. The radio frequency switch may be controlled according to a pre-determined time division duplex and/or time division multiplex sequence under control of the processor. In an alternative arrangement, a signal combiner may be used instead of the switch to connect the antenna and the preamble generator to the input of the receiver circuit 23, provided that the transmission of a preamble from the access point is inhibited. Figure 2 is a schematic diagram illustrating functional blocks; the physical implementation may not correspond to the functional blocks. For example, the receiver, transmitter and some or all of the one or more processors may be implemented as one or more application specific integrated circuits (ASICs), also referred to as chips or chipsets. The processor functional block may be implemented by one or more processors configured to carry out instructions held in memory in computer-readable code to cause the outstation to perform the methods described in this disclosure. The receiver and transmitter provide an interface between radio frequency signals and digital signals, which may be connected to other devices by digital connections such as, for example, Ethernet connections. For example, an access point may be connected to a data network to provide Internet access to subscriber modules, as wireless clients of the access point, within an area of coverage of the access point. Subscriber modules may be connected to other digital devices within a subscriber's premises.

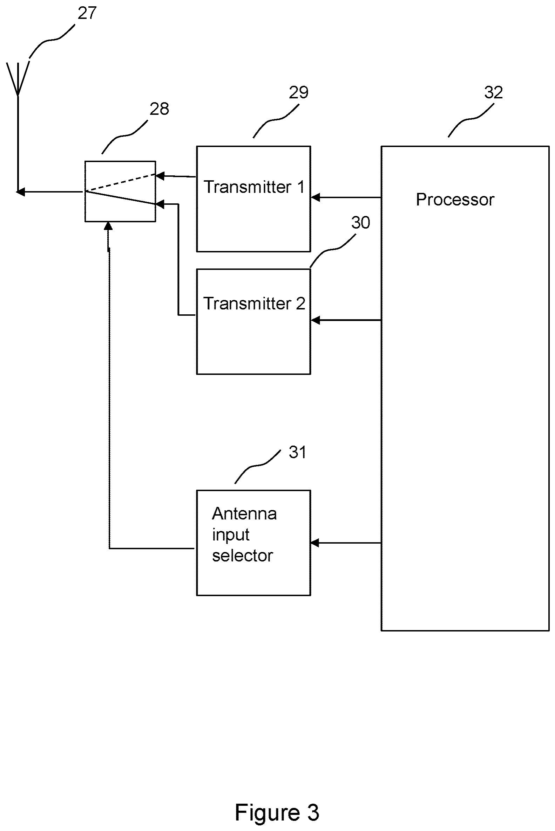

Figure 3 shows a processor 32, which may have the same features as the processor 26 shown in Figure 2, in communication with at least one transmitter circuit. Two transmitter circuits are shown, Transmitter 1 29 and Transmitter 2 30. The processor 32 is also in communication with the antenna input selector 31. In some embodiments, the access point has a proprietary circuit, which allows the Wi-Fi signal format to be altered to avoid the generation of the synchronisation preamble for the further messages in which it is not required. However, in cases where the transmitter cannot be made not to transmit synchronisation preambles, the arrangement of Figure 2 allows the radio frequency switch 28 under control of the antenna input selector to allow each transmitter to generate a preamble but not to transmit the preamble, by disconnecting a transmitter from the antenna 27 during the period when a preamble is provided at radio frequency. In the arrangement as shown, two transmitters can be arranged to transmit messages in which the preamble of one coincides in time with the payload data part of the preceding message. This allows a series of messages without preambles to be transmitted in sequence as shown in Figure 1, using standard Wi-Fi integrated circuits intended for transmitting messages having preambles.

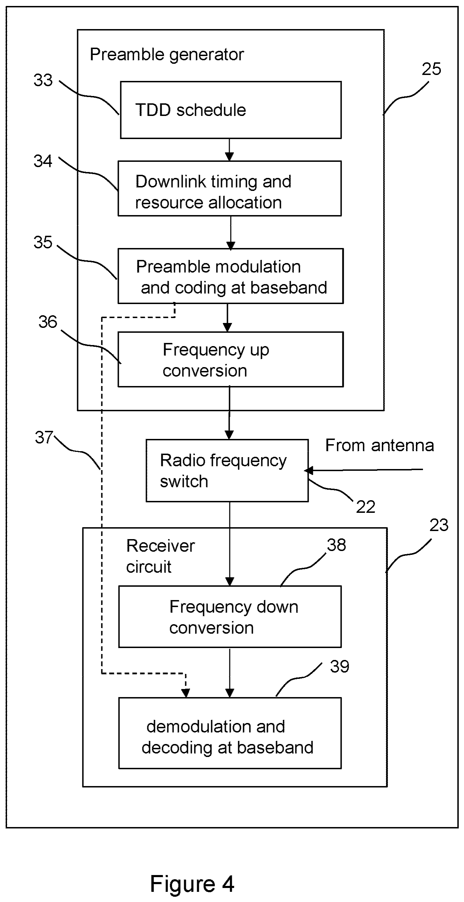

Figure 4 is a block diagram illustrating an example of a preamble generator 25 and a receiver circuit 23 according to this disclosure. The preamble generator 25 may be a dedicated circuit to generate the preamble, or may use parts of the transmitter circuits 29, 30 if these are accessible for this purpose and may include parts of the processor functional block 26, 32. The preamble generator uses 25 a time division duplex and/or time division multiplex schedule 33 to derive downlink timing and resource allocation 34. The schedule 33 is a pre-determined sequence of transmit and receive time slots for the access point and the outstations of the fixed wireless access system, allocating uplink and downlink time windows, and in some examples providing a time division multiple access schedule which schedules transmission of individual outstations and/or groups of outstations. The timing of the generation of the synchronisation for a received message may be derived from the knowledge of the schedule for resource allocation and knowledge of the propagation time, as, for example, derived by receiving a previous message having a preamble, such as the first message 1.

For example, a group of outstations may be a MU-MIMO group, which is chosen to provide orthogonal spatial beams to members of the group. In this way, each member of the group is allocated a respective beam to allow simultaneous transmission of different data to and from each member of the group. The TDD schedule may be provided to the access point and the outstations using appropriate signalling, for example from a network control function. The timing of the generation of the preamble may use a measure of propagation delay and knowledge of the schedule to ensure that downlink messages arrive at the subscriber module in the correct time window of the time division duplex schedule, and to generate the synchronisation preamble with the correct time relationship to the received further message, so that when it is appended to the received further message, the receiver can use the generated preamble to derive the correct timing information to receive the payload data in the further message. At block 35, the synchronisation preamble modulation and coding are shown carried out at baseband in this example. The synchronisation preamble is modulated and coded as appropriate for the transmission standard used, typically using Orthogonal Frequency Division Modulation (OFDM), for example using subcarriers spaced at 78.125 kHz. The OFDM symbols are upconverted 36 in frequency to the transmission frequency, typically in the 2.4, 5 and/or 6 GHz frequency bands, although other frequency bands may be used as appropriate for operation of the fixed wireless access system.

The synchronisation preamble is a signal having known content that allows synchronisation of transmission signals between a sender and a receiver. According to the Wi-Fi message format, the synchronisation preamble appears at the beginning of each Wi-Fi frame and helps with signal detection, equalisation, and establishing the timing of incoming signals. The synchronisation preamble does not carry payload data. The synchronisation preamble as mentioned in this disclosure may be for example a "short preamble" and/or a "long preamble" according to IEEE 802.11 standards, for example IEEE 802.11ax and IEEE 802.11be. A short preamble may improve network performance and is available with later technologies, and a long preamble ensures compatibility with older wireless devices and can improve transmission in area with low signal strength or high interference. In an example, the synchronisation preamble contains repetitions of training symbols with good correlation properties, so that a receiver may use correlation-based methods for signal detection.

The synchronisation preamble is typically a signal modulated onto a radiofrequency carrier. However, the synchronisation preamble may also be a signal modulated on to an intermediate frequency carrier, or may be a signal at baseband, as a digital signal having inphase and quadrature components.

The upconverted signals are switched or combined with signals from the antenna in a combiner/switch unit 22. In examples, this may be an RF switch such as an FET, a directional coupler, or may simply be a resistive combiner.

The receiver circuit 23, which may be part of an ASIC, comprises in this example, a frequency down conversion 38 and demodulation and decoding at baseband, typically receiving OFDM symbols, decoding these according to subcarrier content and processing the decoded data.

As shown in Figure 4, an alternative link 37 may be provided between the trigger frame generator and the receiver circuit, providing a direct link at baseband or at an intermediate frequency. This avoids the need for the upconverter stage in the synchronisation preamble generator, but this may not be possible if access to the receiver circuit is not available at baseband in an ASIC implementing the receiver, or indeed a combined receiver and transmitter.

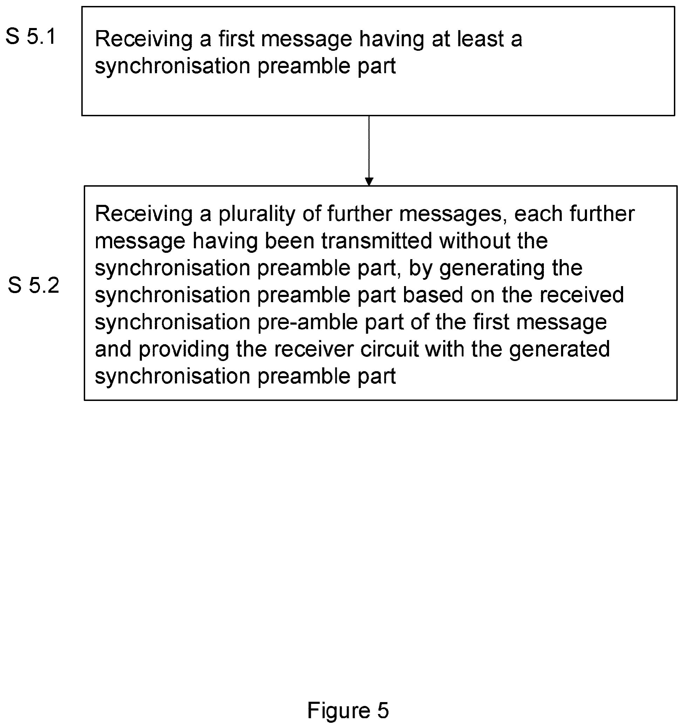

Figure 5 is a flow diagram illustrating a method as disclosed in this description according to steps S5.1 and S5.2.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method of operation of a wireless station in a fixed wireless access network, the wireless station comprising a receiver circuit (23) configured to receive messages each having a synchronisation preamble part and a payload data part, the method comprising:
receiving a first message (11) having at least the synchronisation preamble part (9); and
receiving a plurality of further messages (13), each further message having been transmitted without the synchronisation preamble part, by generating the synchronisation preamble part (17) based on the received synchronisation preamble part (9) of the first message and providing the receiver circuit (23) with the generated synchronisation preamble part.

2. A method according to claim 1, comprising providing the receiver circuit (23) with the generated synchronisation preamble part (17) as a signal modulated onto a carrier frequency, wherein the carrier frequency is the carrier frequency of the first message or the carrier frequency is an Intermediate Frequency.

3. A method according to claim 1, comprising providing the receiver circuit (23) with the generated synchronisation preamble part (17) at baseband.

4. A method according to any preceding claim, wherein the receiver circuit (23) is configured to receive messages conforming to an IEEE 802.11 Wi-Fi standard.

5. A method according to any preceding claim, wherein the receiver circuit (23) is an Application Specific Integrated Circuit.

6. A method according to any preceding claim, wherein the receiver is the receiver of a subscriber module or the receiver of an access point in the fixed wireless access network

7. A wireless station configured for operation in a fixed wireless access network, the wireless station comprising a receiver circuit (23) configured to receive messages each having a synchronisation preamble part and a payload data part, the wireless station being configured to:
receive a first message (11) having at least the synchronisation preamble part; and
receive a plurality of further messages (13), each further message having been transmitted without the synchronisation preamble part, by generating the synchronisation preamble part (17) based on the received synchronisation preamble part (9) of the first message and providing the receiver circuit (23) with the generated synchronisation preamble part.

8. A wireless station according to claim 7, comprising a preamble generation circuit (25) configured to generate the synchronisation preamble part (17) as a signal modulated onto a carrier frequency or comprising a preamble generation circuit configured to generate the synchronisation preamble part at baseband.

9. A wireless station according to claim 8, wherein the receiver circuit (23) is an Application Specific Integrated Circuit and the preamble generation circuit is outside the Application Specific Integrated Circuit.

10. A wireless station according to any one of claims 7-9, wherein the receiver circuit (23) is configured to receive messages conforming to an IEEE 802.11 Wi-Fi standard.

11. A wireless station according to any one of claims 7-10, wherein the wireless station is a subscriber module in the fixed wireless access network or an access point in the fixed wireless access network

12. A wireless station configured for operation in a fixed wireless access network, the wireless station comprising a transmitter circuit configured to transmit messages each having a synchronisation preamble part and a payload data part, the wireless station being configured to:
transmit a first message (1) having at least the synchronisation preamble part (2); and
transmit a plurality of further messages (4, 5, 6, 7) without the synchronisation preamble part, by generating the synchronisation preamble part and inhibiting transmission of the synchronisation preamble part.

13. A wireless station according to claim 12, comprising a switch (22), the wireless station being configured to generate the plurality of further messages having the payload data part and the synchronisation preamble part and to use the switch (22) to allow transmission of the payload data part and to inhibit transmission of the synchronisation preamble part.

14. A wireless station according to claim 13, wherein the switch (22) is configured to switch a signal modulated onto a carrier frequency.

15. A wireless station according to claim 13, wherein the switch (22) is configured to swich a signal at baseband.
